# EUROPÄISCHE PATENTANMELDUNG

(11) **EP 1 300 279 A2**
(43) Veröffentlichungstag der Anmeldung: **09.04.2003**
(21) Anmeldenummer: 02020991.2
(22) Anmeldetag: 20.09.2002
(51) Int. Cl.: B60K 41/00

(54) **Verfahren und Vorrichtung zur Steuerung eines Fahrzeugs**

(30) Priorität: 02.10.2001 DE 10148696
(71) Anmelder: CLAAS Industrietechnik GmbH, 33106 Paderborn (DE)
(72) Erfinder: Blumenthal, Ulrich, Dr., 33100 Paderborn (DE); Obermeier-Hartmann, Robert, 33142 Büren (DE)

(57) **Zusammenfassung**

Die Erfindung betrifft ein Verfahren zur Steuerung eines Fahrzeugs (1), wobei dem Fahrzeug (1) zumindest ein die Bewegung des Fahrzeugs (1) beeinflussendes Getriebe (5) zugeordnet ist, welches über wenigstens eine Anfahrkupplung (6) verfügt und zumindest einem Teil der Laufräder (16) des Fahrzeugs (1) mit dem Fahrzeugbremssystem (53) in Wirkverbindung stehende Bremsen (17-19) zugeordnet sind und wobei die Drehzahl- und/oder Drehrichtungsänderung des zumindest einen Getriebes (5) unter zumindest teilweiser Umgehung der wenigstens einen Anfahrkupplung (6) des zumindest einen Getriebes (5) von dem Fahrzeugbremssystem (53) unterstützt wird.

Indem Drehzahl- und/oder Drehrichtungsänderungen des zumindest einen Getriebes (5) des Fahrzeugs (1) unter zumindest teilweiser Umgehung der wenigstens einen Anfahrkupplung (6) des Getriebes (5) von dem Fahrzeugbremssystem (53) unterstützt wird, ist sichergestellt, dass die Bremsfunktion der Anfahrkupplung (6) bei Drehzahl- und/oder Drehrichtungsänderungen des Getriebes (5) erheblich reduziert oder ganz ausgeschlossen wird. Dies führt zu einer erheblichen Reduzierung der Belastung der Anfahrkupplung (6), sodass deren Standzeit gegenüber aus dem Stand der Technik bekannten Ausführungen deutlich erhöht werden kann.

## Beschreibung

Die Erfindung betrifft ein Verfahren zur Steuerung eines zumindest eine Anfahrkupplung aufnehmenden Getriebes für ein Fahrzeug gemäß dem Oberbegriff des Anspruchs 1.

Unter anderem wird in der EP 0 728 962 ein hydrostatisch-mechanisch leistungsverzweigtes Getriebe für Kraftfahrzeuge, insbesondere für landwirtschaftliche und andere Nutzfahrzeuge beschrieben, dem eine Schaltgetriebeeinheit zum Fahrtrichtungswechsel zugeordnet ist. Damit ein Fahrtrichtungswechsel vollzogen werden kann, ist zumindest der Schaltgetriebeeinheit in an sich bekannter Weise eine Schaltkupplung zugeordnet, über die die Drehzahl der Getriebeeingangswelle auf Null abgebremst wird. Dies führt bei hohen zu übertragenden Leistungen sowohl zu einer erheblichen Wärmeentwicklung in der Kupplung als auch zu deren vorzeitigem Verschleiß. Um diese wärmeentwicklungs- und verschleißbedingten Nachteile zu verringern, ist es auch bekannt mehrere Schaltkupplungen einzusetzen oder in den jeweiligen Antriebsstrang Bremselemente zu integrieren. Dies führt aber nach wie vor zu einer erhöhten Wärmeentwicklung im Antriebsstrang und hat zudem den Nachteil, dass eine erhebliche Zahl von zusätzlichen Baugruppen erforderlich sind.

Der Erfindung liegt deshalb die Aufgabe zugrunde, ein Verfahren und eine Vorrichtung zur Steuerung eines Fahrzeugs zu schaffen, die mit geringem konstruktiven Aufwand eine Verschleißminimierung und Verringerung der Wärmeentwicklung in Antriebssträngen von Kraftfahrzeugen ermöglichen, wobei die bei üblichen Verfahren zur Richtungsänderung von Fahrzeugen anfallende hohe Blindleistung minimiert und der Kraftstoffverbrauch gesenkt wird.

Erfindungsgemäß wird die Aufgabe durch ein Verfahren zur Steuerung eines Fahrzeugs mit zumindest einem eine Anfahrkupplung aufnehmenden Getriebe nach den kennzeichnenden Merkmalen des Anspruchs 1 gelöst.

Indem Drehzahl- und/oder Drehrichtungsänderungen des zumindest einen Getriebes des Fahrzeugs unter zumindest teilweiser Umgehung der wenigstens einen Anfahrkupplung des Getriebes von dem Fahrzeugbremssystem unterstützt wird, ist sichergestellt, dass die Bremsfunktion der Anfahrkupplung bei Drehzahl- und/oder Drehrichtungsänderungen des Getriebes erheblich reduziert oder ganz ausgeschlossen wird. Dies führt zu einer erheblichen Reduzierung des Verschleißes der Anfahrkupplung, sodass deren Standzeit gegenüber aus dem Stand der Technik bekannten Ausführungen deutlich erhöht werden kann. Zudem führt dies neben der Reduzierung der Belastung der Anfahrkupplung zu einer erheblichen Verringerung der zur Verzögerung des Fahrzeugs vom Motor zu generierenden Blindleistung, sodass das Fahrzeug insbesondere bei Fahrtrichtungsänderungen erheblich weniger Kraftstoff benötigt.

Um die Fahrstabilität des Fahrzeugs nicht zu beeinträchtigen ist es weiter von Vorteil, wenn jedem Laufrad oder jeder Achse des Fahrzeugs Radbremsen zugeordnet sind, die bei Drehzahl- und/oder Drehrichtungsänderungen des Getriebes angesprochen werden.

Eine besonders vorteilhafte Weiterbildung der Erfindung ergibt sich dann, wenn das Fahrzeug von einem Zugfahrzeug und einem an diesem adaptierten Koppelfahrzeug gebildet wird und sowohl den Laufrädern und/oder Achsen des Zugfahrzeugs als auch des Koppelfahrzeugs Radbremsen zugeordnet sind, die bei Drehzahl- und/oder Drehrichtungsänderungen des Getriebes angesprochen werden. Auf diese Weise wird auch bei Fahrzeuggespannen sichergestellt, dass neben einer verschleißminimierenden Entlastung der Anfahrkupplung des Zugfahrzeugs eine hohe Fahrstabilität des Gespanns gewährleistet ist.

Um eine hohe Flexibilität des Fahrzeugbremssystems bei Drehzahl- und/oder Drehrichtungsänderungen des Fahrzeugs zu gewährleisten, ist dem Fahrzeugbremssystem in einer vorteilhaften Weiterbildung der Erfindung ein Fahrzeugbremsenmanagement-System zugeordnet.

Eine besonders hohe Flexibilität eines solchen Fahrzeugbremsenmanagement-Systems wird dann erreicht, wenn dem Fahrzeugbremsenmanagement-System Elemente zur Generierung von einem oder mehreren Eingangssignalen zugeordnet sind, die in zumindest einem Bremsenmanagement-Controller Ausgangssignale generieren, die auf die Laufräder und/oder Achsen des Fahrzeugs und die wenigstens eine Anfahrkupplung des Getriebes einwirken können. Eine derartige Vernetzung ermöglicht es auf sehr einfache Weise dem Fahrzeugführer eine Vielzahl von Eingabeelementen zuzuordnen über die er einen Bremsvorgang auslösen kann, wobei die Wahl des jeweiligen Eingabemittels durch den Fahrer frei bestimmt werden kann. Dies ist insbesondere bei Fahrzeugen von Bedeutung, bei denen zwischen so genannter Straßen- oder Transportfahrt und Gelände- oder Arbeitsfahrt unterschieden wird, wobei der Fahrer in jedem dieser Bedienmodi zum Teil sehr unterschiedliche Bedienelemente betätigt und seine überwiegende Aufmerksamkeit ganz unterschiedlichen Prozessen gelten muss, sodass auch das Auslösen eines Brems- oder Beschleunigungsvorganges an die Handhabung dieser unterschiedlichen Bedienelemente anpassbar sein sollte. Eine derartige Vernetzung ermöglicht zusätzlich die Konfiguration völlig neuer Bedienstrukturen, sodass auch komplexe Fahrzeuge mit zum Beispiel einer sogenannten Einhebelbedienung oder Einpedalbedienung darstellbar werden.

Um unabhängig vom Verzögerungswunsch des Fahrers stets eine hohe Fahrstabilität des Fahrzeugs zu gewährleisten, können die dem Bremsenmanagement-Controller zugeführten Eingangssignale fahrer- oder fahrzeuggeneriert sein, wobei die fahrzeuggenerierten Eingangssignale ohne Fahrermitwirkung generiert werden und im Wesentlichen zur Überwachung der Fahrstabilität und der Erreichung des eingegebenen Verzögerungswunsches herangezogen werden.

Eine besonders einfache Steuerung des Bremsvorganges ergibt sich dann, wenn der Fahrer über geeignete Eingabemittel ein Bremssignal, ein Lenksignal, ein Signal zur Bestimmung der Fahrtrichtung und das so genannte "Bremsen über den Antriebsstrang" auslösen kann.

Eine besonders einfache Überwachung der Fahrstabilität des Fahrzeugs und der Erreichung des vom Fahrer eingegebenen Verzögerungswunsches wird dann erreicht, wenn die fahrzeuggenerierten Eingangssignale für den Bremsenmanagement-Controller die Eingangssignale Geschwindigkeit des Fahrzeugs "Geschwindigkeit über Grund", die Geschwindigkeit eines oder mehrere Laufräder "Radgeschwindigkeit", die ermittelte Fahrtrichtung des Fahrzeuges "Fahrtrichtung" oder die ermittelte Stellung eines oder mehrerer Laufräder des Fahrzeugs "Radstellung" sind.

In vorteilhafter Weiterbildung der Erfindung wird die wenigstens teilweise Umgehung der Anfahrkupplung bei Drehzahl- und/oder Drehrichtungsänderungen des die Anfahrkupplung aufnehmenden Getriebes durch Einbeziehung des Fahrzeugbremssystems auf einfache Weise dadurch erreicht, dass die vom Bremsenmanagement-Controller generierten Ausgangssignale sowohl auf die Anfahrkupplung des Getriebes als auch auf das Fahrzeugbremssystem einwirken. Dies hat weiter auch den Vorteil, dass der Fahrer nicht mehr unmittelbar ein Bremsorgan betätigen muss, sondern dass auch allein die Eingabe eines Fahrtrichtungsänderungswunsches zu einem selbsttätigen Ansprechen des Bremssystems durch den Bremsenmanagement-Controller führt. Eine hohe Fahrstabilität und eine einfache Handhabung des Fahrzeugs beispielsweise beim Abbremsen und Beschleunigen wird insbesondere dann erreicht, wenn der Bremsenmanagement-Controller zudem ein oder mehrere Ausgangssignale generiert, die einem an sich bekannten Fahrzeugmanagementsystem zugeführt werden, wobei derartige Fahrzeugmanagementsysteme insbesondere die Aufgabe haben, in Abhängigkeit von Beladezuständen, von Fahrgeschwindigkeiten, der Beschaffenheit des von den Laufrädern berührten Bodens und von zu durchfahrenden Kurvenradien stets ein stabiles Fahrverhalten des Fahrzeugs sicherzustellen.

Von besonderem Vorteil ist es, wenn die einem Fahrzeugmanagementsystem zugeführten Ausgangssignale des Bremsenmanagement-Controllers die Geschwindigkeitsänderung des Fahrzeugs und die rechnerisch ermittelte Energie des Fahrzeugs umfassen. Dabei kann die ermittelte Geschwindigkeitsänderung zum Beispiel mittels des Fahrzeugmanagementsystems überwacht und beeinflusst werden, um die Fahrstabilität gefährdende Beschleunigungen oder Verzögerungen des Fahrzeugs zu vermeiden. Die rechnerisch ermittelte kinetische Energie des Fahrzeugs dagegen, kann im Fahrzeugmanagementsystem beispielsweise dahingehend weiterverarbeitet werden, dass sich bei einem am Hang stehenden Fahrzeug erst dann die Bremsen lösen, wenn die vom Antriebssystem bereitgestellte Energie ein Zurückrollen des Fahrzeugs sicher ausschließt.

Zudem schafft das erfindungsgemäße Verfahren die Möglichkeit, dass der Fahrer den Bremsvorgang nicht mehr durch unmittelbares Betätigen des Fahrzeugbremssystems auslösen kann, indem er beispielsweise über die Betätigung des Fahrhebels die Richtungsänderung vorgibt und das erfindungsgemäße System selbsttätig den Bremsvorgang auslöst und kontrolliert.

Besonders wirkungsvoll lässt sich das erfindungsgemäße Verfahren bei so genannten Off-Highway Fahrzeugen, insbesondere land- und forstwirtschaftlichen Fahrzeugen einsetzen, die in der Regel sowohl zum Transport auf der Straße als auch zum bestimmungsgemäßen Gebrauch in unebenem Gelände wie etwa Feldern oder im Forst eingesetzt werden und insbesondere in unebenem Gelände lastabhängig erheblichen Fahrgeschwindigkeitsänderungen unterworfen sind. Indem der erfindungsgemäße Bremsenmanagement-Controller sowohl auf die Anfahrkupplung als auch das dem jeweiligen Fahrzeug zugeordnete Fahrzeugbremssystem einwirken kann, wird der belastungsreduzierte Betrieb der Anfahrkupplungen gewährleistet.

Konstruktiv besonders einfache Ausführungen für die die Eingangssignale für den Bremsenmanagement-Controller generierenden Elemente ergeben sich dann, wenn hierfür an sich bekannte und häufig ohnehin in den Fahrzeugen vorhandene Lenkräder, Bremspedale, Fahrhebel, sonstige Bedienhebel, Fahrgeschwindigkeitssensoren, Radgeschwindigkeitssensoren, Fahrtrichtungssensoren und Radwinkelsensoren verwendet werden.

Weitere vorteilhafte Ausgestaltungen sind Gegenstand weiterer Unteransprüche und werden nachfolgend an Hand von Zeichnungen näher erläutert.

Es zeigen:
- Figur 1: eine schematische Draufsicht auf ein Fahrzeug mit erfindungsgemäßem Bremsenmanagementsystem
- Figur 2: eine Detailansicht eines Getriebes mit erfindungsgemäßer Anfahrkupplung
- Figur 3: eine Seitenansicht eines Fahrzeugs mit erfindungsgemäßem Bremsenmanagementsystem
- Figur 4: das erfindungsgemäße Bremsenmanagementsystem in Blockbilddarstellung
- Figur 5: Energiebilanz bei Drehrichtungsumkehr mittels Wendegetriebe

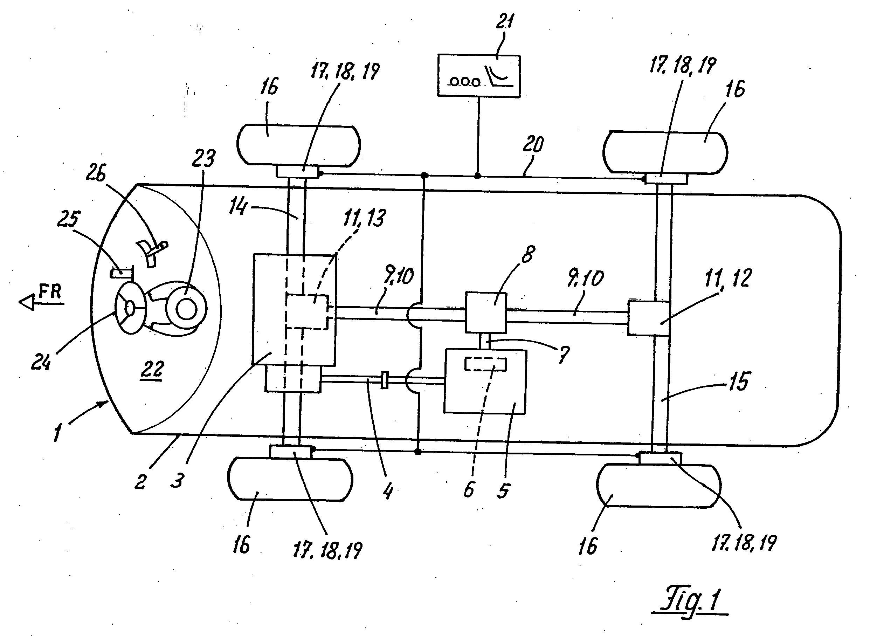

Figur 1 zeigt eine schematische Draufsicht auf ein erfindungsgemäßes Fahrzeug 1, dessen nur schematisch angedeuteter Rahmen 2 einen Antriebsmotor 3 aufnimmt, der über an sich bekannte Energieübertragungsmittel 4 mit zumindest einem noch näher zu beschreibenden Getriebe 5 in Wirkverbindung steht, wobei das Getriebe 5 zumindest eine sogenannte Anfahrkupplung 6 aufnimmt. Eine erste Abtriebswelle 7 dieses Getriebes 5 steht in an sich bekannter Weise mit einem Zwischengetriebe 8 in Wirkverbindung, dessen im einfachsten Fall als Zwischenwellen 9 ausgeführten Abtriebsglieder 10 anderenends weitere beispielsweise als Differentialgetriebe 11 ausgeführte Verteilgetriebe 12, 13 antreiben. Während das in Fahrtrichtung FR vorn liegende Verteilgetriebe 13 in nicht näher dargestellter Weise die Vorderachse 14 des erfindungsgemäßen Fahrzeugs 1 antreibt, steht das in Fahrtrichtung FR rückwärtige Verteilgetriebe 12 in analoger Weise mit der Hinterachse 15 des Fahrzeugs 1 in Antriebsverbindung. Sowohl die Vorderachse 14 als auch die Hinterachse 15 nehmen im dargestellten Ausführungsbeispiel an ihren freien Enden ein oder mehrere Laufräder 16 auf, die über Radbremsen 17 abgebremst werden können. Es liegt im Rahmen der Erfindung, dass die Radbremsen 17 auch als Hydromotoren 18 ausgeführt sein können, sodass das Antreiben und Abbremsen der Räder 16 allein durch diese Hydromotoren 18 erfolgt. Andererseits können die schematisch dargestellten Radbremsen 17 auch an sich bekannte und deshalb nicht näher erläuterte als Radmotoren 19 ausgeführte Getriebe-Bremsen-Kombinationen sein. Zudem liegt es im Rahmen der Erfindung, dass dem Fahrzeug 1 ein oder mehrere angetriebene oder frei drehbare Achsen 14, 15 zugeordnet sind. In erfindungsgemäßer und noch näher zu beschreibender Weise sind die Radbremsen 17 über ein Signalübertragungssystem 20 miteinander und mit einem dem Fahrzeug 1 zugeordneten Bremsenmanagement-Controller 21 verbunden, wobei die sogenannten Radbremsen 17, wie dargestellt, allen Laufrädern 16 des Fahrzeugs 1 oder nur den jeweiligen Achsen 14, 15 zugeordnet sein können.

Im Fahrerstand 22 des Fahrzeugs 1 stehen dem Fahrer 23 zur Steuerung des Fahrzeugs 1 in an sich bekannter Weise zumindest ein Lenkrad 24, ein Bremspedal 25 und ein Fahrhebel 26 zur Verfügung.

Im einfachsten Fall kann das erfindungsgemäße Getriebe 5 des Fahrzeugs 1 als Wendegetriebe 27 ausgeführt sein, wobei die motorseitige Eingangswelle 4 mit einer Zwischenwelle 28 in Wirkverbindung steht. Der Zwischenwelle 28 sind zumindest ein erstes Stirnrad 29 und wenigstens ein weiteres Stirnrad 30 zugeordnet, wobei beide Stirnräder 29, 30 über eine Anfahrkupplung 6 wechselweise mit der Zwischenwelle 28 des Getriebes 27 drehfest verbindbar sind. Der wenigstens einen, die Räder 16 des Fahrzeugs 1 antreibenden Abtriebswelle 7 des Getriebes 27 sind ebenfalls zwei Stirnräder 31, 32 zugeordnet, wobei das eine Stirnrad 31 direkt mit dem ersten Stirnrad 29 der Zwischenwelle 28 kämmt, während das andere Stirnrad 32 der Abtriebswelle 7 über ein Zwischenrad 33 zur Drehrichtungsumkehr mit dem zweiten Stirnrad 30 der Zwischenwelle 28 in Antriebsverbindung steht. Es liegt im Rahmen der Erfindung, dass das Wendegetriebe 27 beispielsweise Bestandteil eines nicht näher dargestellten als hydrostatisch-mechanisch leistungsverzweigtes Getriebe 34 ausgeführten Getriebes 5 sein kann. Um beispielsweise die Fahrtrichtung FR des Fahrzeugs 1 von Vorwärts- in Rückwärtsfahrt und umgekehrt zu ändern, muss die Anfahrkupplung 6 zunächst die Antriebsverbindung zwischen dem jeweils mit der Zwischenwelle 28 gerade drehfest verbundenen Stirnrad 29, 30 lösen. Neben den inneren reibungsbedingten Widerständen des Antriebsstranges 3-15 und den äußeren Reibwiderständen der Laufräder 16 auf dem Boden erfolgt das Abbremsen des Fahrzeugs 1 bis zu dem für einen Fahrtrichtungswechsel erforderlichen Stillstand in erheblichem Maß über die Anfahrkupplung 6. Dies führt wie aus dem Stand der Technik bekannt, zu einem erheblichen Verschleiß der Anfahrkupplung 6. Erfindungsgemäß kann die diesen Verschleiß begünstigende Bremsfunktion der Anfahrkupplung 6 dann reduziert oder vermieden werden, wenn die Drehzahl- oder Drehrichtungsänderung wenigstens einer Abtriebswelle 7 des vom Motor 3 des Fahrzeugs 1 angetriebenen, im einfachsten Fall als Wendegetriebe 27 ausgeführten Getriebes 5 unter zumindest teilweiser Umgehung der wenigstens einen Anfahrkupplung 6 des Getriebes 5, 27 von dem Fahrzeugbremssystem 17-21 unterstützt wird.

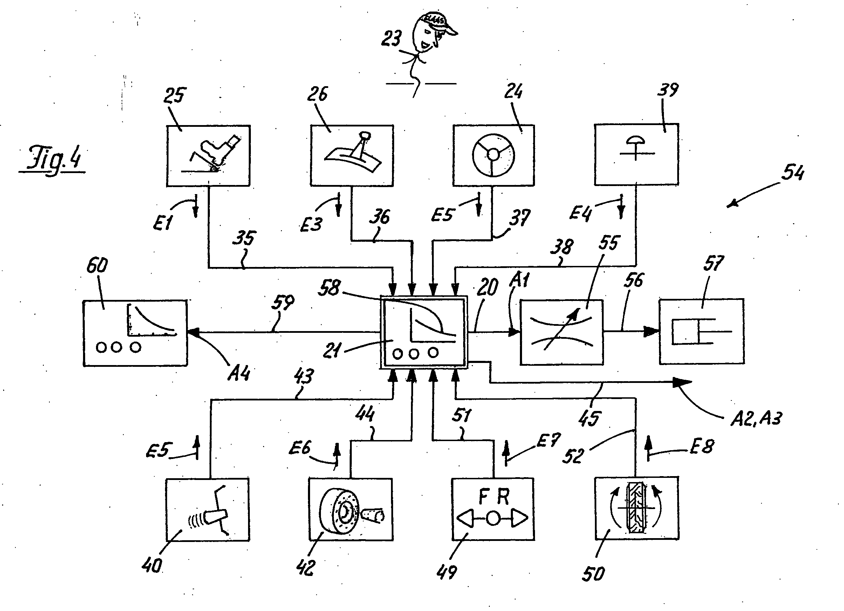

Erfindungsgemäß wird diese teilweise Umgehung der Anfahrkupplung 6 durch einen Bremsenmanagement-Controller 21 gesteuert. Schematisch ist dieser Steuervorgang in den Figuren 3 und 4 dargestellt. Entsprechend Figur 3 sind die bereits beschriebenen, in den Fahrerstand 22 integrierten und vom Fahrer 23 betätigbaren Bedienelemente Lenkrad 24, Fahrhebel 26, und Bremspedal 25 über Leitungssysteme 35-37 mit dem Bremsenmanagement-Controller 21 verbunden. Zudem ist im Fahrerstand 22 ein weiterer Bedientaster 39 angeordnet, bei dessen Bedienung das sogenannte Bremsen über den Antriebsstrang mittels an sich bekannter und deshalb nicht näher beschriebener Motorbremse oder Getriebebremse, auch Retarder genannt, eingeleitet wird. Dieser den Antriebsstrangbremsvorgang auslösende Bedientaster 39 ist ebenfalls über ein Leitungssystem 38 mit dem Bremsenmanagement-Controller 21 verbunden. Im einfachsten Fall können die beschriebenen Leitungssysteme 35-38 als elektrische Leitungen 35-38 ausgeführt sein, die von den Bedienelementen, Lenkrad 24, Bremspedal 25, Fahrhebel 26 und Bedientaster 39 generierte und noch näher zu beschreibende elektrische Signale an den Bremsenmanagement-Controller 21 übertragen. Es liegt im Rahmen der Erfindung, dass diese Signalübertragung unter Verzicht auf die Leitungssysteme 35-38 auch drahtlos beispielsweise mittels Funk erfolgen kann.

Im dargestellten Ausführungsbeispiel ist dem Fahrzeug 1 in seinem frontseitigen Bereich ein Fahrgeschwindigkeitssensor 40 zugeordnet, der beispielsweise in an sich bekannter Weise nach dem Dopplerprinzip Schallwellen 41 aussendet und wieder empfängt und aus der Frequenzänderung und/oder der Änderung der Amplitude die Fahrgeschwindigkeit des Fahrzeugs 1 ermittelt. Ferner ist zumindest einem der Laufräder 16 ein sogenannter Radgeschwindigkeitssensor 42 zugeordnet, der die Drehzahl des mit dem Radgeschwindigkeitssensor 42 in Wirkverbindung stehenden Laufrades 16 ermittelt. Es liegt im Rahmen der Erfindung, dass jedem der Laufräder des Fahrzeugs 1 ein solcher Radgeschwindigkeitssensor 42 zugeordnet sein kann. Über weitere Leitungssysteme 43, 44 werden die in dem wenigstens einen Fahrgeschwindigkeitssensor 41 sowie dem wenigstens einen Radgeschwindigkeitssensor 42 generierten Signale an den Bremsenmanagement-Controller 21 übermittelt. Auch hier kann die Signalübertragung mittels Funk drahtlos erfolgen, sodass für diesen Fall die Leitungssysteme 43, 44 entfallen könnten. Die von den beschriebenen Leitungssystemen 35-38, 43, 44 übertragenen und noch näher zu erläuternden Signale bilden die Eingangssignale E1-E6 des Bremsenmanagement-Controllers 21. Der Bremsenmanagement-Controller 21 generiert gemäß Fig. 3 zumindest aus diesen Einganssignalen E1-E6 wenigstens ein erstes Ausgangssignal A1 welches über das Signalübertragungssystem 20 den bereits beschriebenen Radbremsen 17 zugeführt wird. Über ein weiteres Signalübertragungssystem 45 wird zumindest ein weiteres vom Bremsenmanagement-Controller 21 generiertes Ausgangssignal A2 an das wenigstens eine Getriebe 5 zur Auslösung eines Schaltvorganges in diesem Getriebe 5 übertragen. Es liegt im Rahmen der Erfindung, dass der Bremsenmanagement-Controller 21 weitere Ausgangssignale An generieren kann, wobei die Ausgangssignale A1 - An beispielsweise elektrische oder hydraulische Signale sein können und die zur Übertragung der Ausgangssignale A1 - An erforderlichen Signalübertragungssysteme 20, 45, 46 dementsprechende elektrische oder hydraulische Leitungssysteme 20, 45, 46 sind. Auch bezüglich der Übertragung von elektrischen Ausgangssignalen A1 - An kann durch deren drahtlose Übertragung auf die dargestellten Signalübertragungssysteme 20, 45, 46 verzichtet werden.

Dem Fahrzeug 1 kann ferner ein ein- oder mehrachsiges Koppelfahrzeug 47 zugeordnet sein, dessen Fahrwerksachse 48 in analoger Weise zum Fahrzeug 1 über Laufräder 16 und mit diesen zusammenwirkende Radbremsen 17 verfügt, die über das bereits beschriebene erste Signalübertragungssystem 20 mit dem Bremsenmanagement-Controller 21 in Verbindung stehen, wobei entweder alle über Radbremsen 17 verfügenden Laufräder 16 oder nur die Fahrwerksachsen 48 über dieses Signalübertragungssystem 20 mit dem Bremsenmanagement-Controller 21 verbunden sein können. Zudem liegt es im Rahmen der Erfindung, dass auch einem oder mehreren der Laufräder 16 des Koppelfahrzeugs 47 die beschriebenen Radgeschwindigkeitssensoren 42 zugeordnet sein können.

Gemäß der Flussdiagrammdarstellung in Figur 4 kann der Fahrer 23 die im Fahrerstand integrierten Bedienelemente Lenkrad 24, Bremspedal 25, Fahrhebel 26 und Bedientaster 39 betätigen, sodass die von diesen Bedienelementen 24-26, 39 generierten Eingangssignale E1-E4 fahrergeneriert sind. Im einfachsten Fall können die Eingangssignale E1-E4 elektrische Signale sein, die in an sich bekannter Weise von Weg- oder Drehwinkelsensoren sowie Ein/Aus-Tastern generiert werden.

Im dargestellten Ausführungsbeispiel verkörpert Eingangssignal E1 ein vom Bremspedal 25 generiertes Bremssignal "Bremsen", E2 ein vom Lenkrad 24 generiertes Lenksignal "Lenkeinschlag", E3 ein vom Fahrhebel 26 generiertes die Vorgabe der Fahrtrichtung (Vorwärtsfahrt, Rückwärtsfahrt) bestimmendes Signal "Fahrtrichtung" und E4 das durch den Bedientaster 39 generierte Signal "Bremsen über Antriebsstrang" zum Zu- oder Abschalten der Motorbremse und/oder zumindest einer Getriebebremse.

Neben dem ein Fahrgeschwindigkeitssignal E5 "Geschwindigkeit über Grund" generierenden Fahrgeschwindigkeitssensor 40 und den ein Drehzahlsignal E6 "Radgeschwindigkeit" für das jeweilige Laufrad 16 generierenden Radgeschwindigkeitssensoren 42 können dem Fahrzeug 1 sowie dem ihm zugeordneten Koppelfahrzeug 47 an sich bekannte Fahrtrichtungssensoren 49 und den Laufrädern 16 ebenfalls bekannte Radwinkelsensoren 50 zugeordnet sein. Während die Fahrtrichtungssensoren 49 im einfachsten Fall die Drehrichtung der Vorder- oder Hinterachse 14, 15 sowie der Fahrwerksachse 48 des Koppelfahrzeugs 47 ermitteln und aus dieser ermittelten Drehrichtung ein Fahrtrichtungssignal E7 "Fahrtrichtung" generieren, ermitteln die Radwinkelsensoren 50 die Auslenkung des dem jeweiligen Radwinkelsensor 50 zugeordneten Laufrades 16 und generieren hieraus jeweils ein Lenksignal E8 "Radstellung". Über weitere Signalübertragungssysteme 51, 52 werden das Fahrtrichtungssignal E7 und die Lenksignale E8 ebenfalls an den Bremsenmanagement-Controller 21 übertragen, sodass die Signale E5 - E8 fahrzeuggenerierte Eingangssignale E5 - E8 des Bremsenmanagement-Controllers 21 bilden.

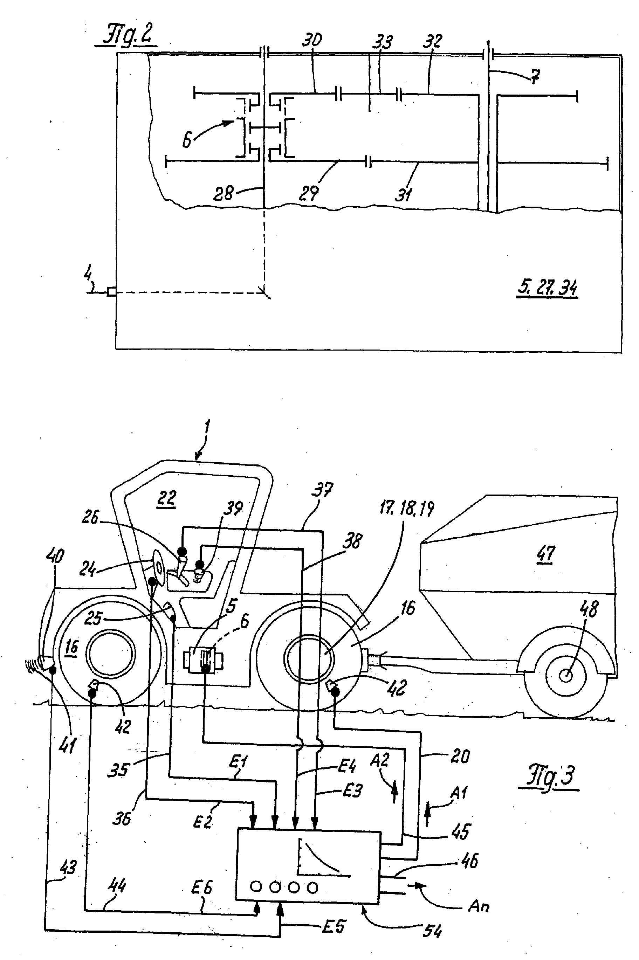

Wie bereits beschrieben und aus Figur 3 ersichtlich sind die Radbremsen 17 der Laufräder 16 über ein Signalübertragungssystem 20 mit dem Bremsenmanagement-Controller 21 verbunden, wobei der Bremsenmanagement-Controller 21 aus einer Vielzahl von Einganssignalen E1-E8 Ausgangssignale A1-An generiert, die einerseits über das Leitungssystem 20 auf die Radbremsen 17 und andererseits über zumindest ein weiteres Leitungssystem 45 auf die Anfahrkupplung 6 des wenigstens einen Getriebes 5 des Fahrzeugs 1 einwirken. Gemäß Fig. 2 bilden die Radbremsen 17, die auch als Hydromotoren 18 oder an sich bekannte Radmotoren 19 ausgeführt sein können und das sie verbindende Signalübertragungssystem 20 das Fahrzeugbremssystem 53. Wie in den Figuren 3 und 4 dargestellt, verkörpert das System aus den die Eingangssignale E1-E8 generierenden Elementen 24-26, 39, 40, 42, 49, 50, dem Bremsenmanagement-Controller 21 und den von dessen Ausgangssignalen A1-An beeinflussten Elementen 5, 6, 17-19 des Fahrzeugs 1, 47 sowie die zugehörigen Signalübertragungssysteme 20, 35-38, 43-46, 51, 52 das erfindungsgemäße Bremsenmanagementsystem 54, welches dem Fahrzeugbremssystem 53 zugeordnet ist. Durch den Einsatz eines solchen Bremsenmanagementsystems 54 wird zunächst sichergestellt, dass der Fahrer 23 den Bremsvorgang und damit die Verzögerung des Fahrzeugs 1, 47 nicht mehr unmittelbar beeinflussen kann. Indem die Verzögerung des Fahrzeugs 1, 47 durch einen verschiedenste Parameter E1-E8 des Fahrzeugs 1 berücksichtigenden Bremsenmanagement-Controller 21 unmittelbar ausgelöst wird, kann in erfindungsgemäßer Weise vor allem beim Abbremsen und der Fahrtrichtungsumkehr des Fahrzeugs 1 dafür gesorgt werden, dass die Anfahrkupplung 6 des Getriebes 5 durch Zuschaltung einer oder mehrerer Radbremsen 17 der Laufräder 16 energetisch entlastet und bei Fahrtrichtungsumkehr deutlich weniger Blindleistung im Fahrzeug 1 generiert wird.

Der einfachste Anwendungsfall ergibt sich, wenn der Fahrer 23 durch Betätigung des Bremspedals 25 einen Bremsvorgang auslöst oder durch Schalten des Fahrhebels 26 eine Fahrtrichtungsänderung vorgibt. Aus den dem Bremsenmanagement-Controller 21 zugeführten Eingangssignalen E1, E3 generiert dieser zumindest ein erstes Ausgangssignal A1 "Bremsen", welches über das Signalübertragungssystem 20 einer oder mehreren Radbremsen 17 der Laufräder 16 zugeführt wird. Im dargestellten Ausführungsbeispiel nach Figur 4 wird die Radbremse 17 in an sich bekannter und deshalb nicht näher dargestellter Weise von zumindest einem einstellbaren Bremsventil 55 und wenigstens einem mit diesem Bremsventil 55 über ein hydraulisches Leitungssystem 56 in Wirkverbindung stehenden Bremszylinder 57 gebildet. Das vom Bremsenmanagement-Controller 21 generierte Ausgangssignal A1 bewirkt zunächst eine Verstellung des wenigstens einen Bremsventils 55, in dessen Folge der Bremszylinder 57 das ihm zugeordnete Laufrad 16 abbremst. Über zumindest eines der fahrzeuggenerierten Eingangssignale E5 "Geschwindigkeit über Grund", E6 "Radgeschwindigkeit" oder E7 "Fahrtrichtung" erhält der Bremsenmanagement-Controller 21 eine Information über die momentane Bewegung des Fahrzeugs zum Beispiel wann das Fahrzeug im Falle eines gewünschten Fahrtrichtungswechsels steht, seine Fahrgeschwindigkeit Null ist.

Zudem generiert der Bremsenmanagement-Controller 21 ein weiteres Ausgangssignal A2, welches über das Signalübertragungssystem 45 an die Anfahrkupplung 6 des wenigstens einen Getriebes 5 des Fahrzeugs 1 übermittelt wird. In Abhängigkeit von der durch den Bremsenmanagemnt-Controller 21 definierten Bremscharakteristik führt das Ausgangssignal A2 vor oder während Ausgangsignal A1 den Bremsvorgang bewirkt in dem wenigstens einen Getriebe 5 des Fahrzeugs 1 zum öffnen der Anfahrkupplung 6. Im Moment des Stehenbleibens generiert der Bremsenmanagement-Controller 21 ein weiteres Ausgangssignal A3, welches ebenfalls über das Signalübertragungssystem 45 an die Anfahrkupplung 6 des wenigstens einen Getriebes 5 des Fahrzeugs 1 übermittelt wird. Das Ausgangssignal A3 löst in dem Getriebe 5 einen weiteren Schaltvorgang, nämlich das Wiedereinkuppeln der Anfahrkupplung 6 aus, wobei Ausgangssignal A1 die aktivierten Radbremsen 17 wieder löst und die Abtriebswelle 7 des Getriebes 5 eine Drehrichtungsumkehr und damit das Fahrzeug 1 eine Fahrtrichtungsänderung erfährt. Es liegt im Rahmen der Erfindung, dass abweichend von dem beschrieben einfachsten Anwendungsfall die Anfahrkupplung 6 des Getriebes 5 neben den erfindungsgemäß aktivierten Radbremsen 17 ebenfalls am Abbremsen des Fahrzeugs 1 beteiligt sein kann.

Um den Verschleiß der Bremsbeläge zu minimieren kann bei entsprechend niedrigem Verzögerungswunsch des Fahrers 23 ein Aktivieren der Radbremsen 17 durch den Bremsenmanagement-Controller 21 dadurch verhindert werden, dass beispielsweise über den im Fahrerstand 22 angeordneten Bedientaster 39, wie bereits beschrieben, ein Signal "Bremsen über Antriebsstrang" generiert wird. Dabei wird das Fahrzeug 1 in an sich bekannter und deshalb nicht näher beschriebener Weise über sogenannte Motor- oder Getriebebremsen verzögert.

Aufgrund dessen, dass die Fahrstabilität eines Fahrzeugs 1, 47 maßgeblich von der Befahrbarkeit des von den Laufrädern 16 überrollten Untergrundes (Straße, Ackerboden), der Masse und Masseverteilung des Fahrzeugs 1, 47, der Fahrgeschwindigkeit und zu durchfahrenden Kurvenradien abhängt, kann das erfindungsgemäße Bremsenmanagementsystem 54 auch zur Verbesserung der Fahrstabilität des Fahrzeugs 1, 47 herangezogen werden. Dies hat insbesondere für Land- und Forstmaschinen eine große Bedeutung, da derartige Fahrzeuge 1, 47 häufig in schwerbefahrbarem unebenen und durch Regeneinwirkung stark rutschigem Gelände eingesetzt werden und in Abhängigkeit vom aufgenommenen Erntegut starken Gewichtsschwankungen unterliegen. Indem das erfindungsgemäße Fahrzeug 1, 47 neben den fahrergenerierten Eingangssignalen E1-E4 auch fahrzeuggenerierte Eingangssignale E5-E8 dem Bremsenmanagement-Controller 21 zuführt, ist der Bremsenmanagement-Controller 21 einerseits in der Lage die vom Fahrer 23 vorgegebenen Signale "Bremsen" E1, "Lenkeinschlag" E2, "Fahrtrichtung" E3, "Bremsen über Antriebsstrang" E4 mit den am Fahrzeug 1, 47 eingetretenen Veränderungen "Geschwindigkeit über Grund" E5, "Radgeschwindigkeit" E6, "Fahrtrichtung" E7, "Radstellung" E8 zu vergleichen und deren Erreichen zu überwachen. Andererseits besteht aber auch die Möglichkeit, dem Bremsenmanagement-Controller 21 Grenzwerte für beliebige Parameter in Form von Kennlinien 58 fest einzuprogrammieren, die zur Gewährleistung einer hohen Fahrstabilität nicht überschritten werden dürfen. Dies betrifft insbesondere die Einhaltung von Grenzbeschleunigungen und Verzögerungen in Abhängigkeit von der Fahrgeschwindigkeit, der Fahrzeugmasse und den zu durchfahrenden Kurvenradien, wobei Wechselwirkungen zwischen diesen Parametern ebenfalls berücksichtigbar sind. Zudem kann mittels des Bremsenmanagement-Controllers 21 dafür gesorgt werden, dass die durch den Fahrer 23 vorgewählte Verzögerung auf alle Laufräder 16 des Fahrzeugs 1, 47 so übertragen wird, dass das Fahrzeug 1, 47 die vorgewählte Verzögerung erreicht, wobei die Verzögerung der einzelnen Laufräder 16 voneinander abweichen kann. Dies ist insbesondere dann von Bedeutung, wenn das Fahrzeug 1 mit einem Koppelfahrzeug 47 betrieben wird und sichergestellt werden soll, dass während des Bremsvorganges eine Relativbewegung zwischen Fahrzeug 1 und Koppelfahrzeug 47 nicht oder nur unwesentlich auftritt. Indem den Laufrädern 16 des Fahrzeugs 1, 47 Radwinkelsensoren 50 und Radgeschwindigkeitssensoren 42 zur Ermittlung der Laufradgeschwindigkeit zugeordnet sind, kann mittels des Bremsenmanagement-Controllers 21 dafür gesorgt werden, dass die Geschwindigkeit jedes Laufrades 16 an den Lenkeinschlag des jeweiligen Laufrades 16 angepasst wird. Insbesondere verbessert dies die Fahrstabilität bei Kurvenfahrt und führt zu einem geringeren Radverschleiß, da dem vor allem auf rutschigem Untergrund erheblichen Radschlupf durch individuelles Abbremsen der Laufräder 16 auf einfache Weise entgegengewirkt werden kann.

Zudem kann der Bremsenmanagement-Controller 21 so konfiguriert sein, dass er in der Lage ist, die zum Abbremsen des Fahrzeugs 1, 47 erforderliche Bremskraft zu ermitteln und aus dieser Bremskraft die für das nachfolgende Anfahren benötigte Energie zu berechnen. Die so ermittelte Anfahrenergie könnte vom Bremsenmanagement-Controller 21 als weiteres Ausgangssignal A4 mittels Signalübertragungssystem 59 einem an sich bekannten und deshalb nicht näher beschriebenen Fahrzeugmanagementsystem 60 zugeführt werden, in dem in Abhängigkeit von zumindest diesem Signal A4 ein fahrstabiler Anfahrvorgang des Fahrzeugs 1, 47 sichergestellt werden kann.

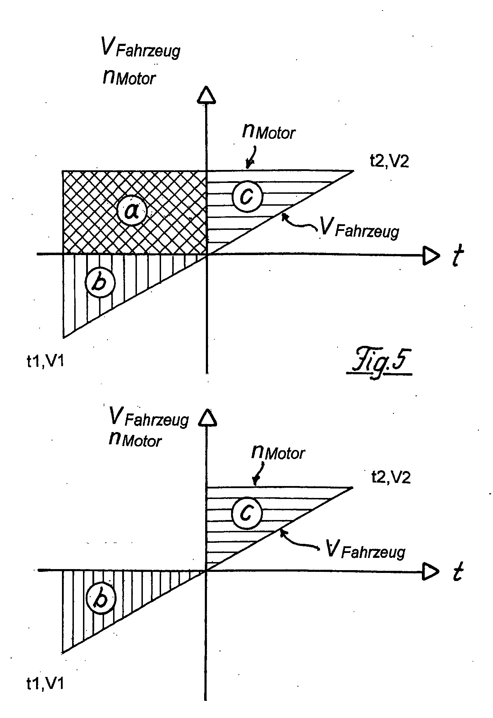

Die Energiebilanz bei Drehrichtungsumkehr mittels Wendegetriebe nach dem Stand der Technik ist in Figur 5, linke Abbildung, dargestellt. Das Fahrzeug 1 fährt zum Zeitpunkt t1 mit der Geschwindigkeit ―v1 und bremst über den weiteren Zeitverlauf t bis zur Geschwindigkeit v =0 ab, um darauffolgend wieder beschleunigt zu werden, wobei sich das Fahrzeug 1 zum Zeitpunkt t2 schließlich mit der Geschwindigkeit v2 bewegt. Dabei wird vereinfacht davon ausgegangen, dass die Motordrehzahl n_{Motor} während dieses Vorganges annähernd konstant ist. Die Fläche "b" repräsentiert die Energiemenge, die dem Fahrzeug 1 beim Bremsen entzogen wird und nach dem Stand der Technik in der wenigstens einen Anfahrkupplung 6 anfällt. Die Fläche "c" stellt die Energiemenge des Motors 3 dar, die durch das Durchrutschen der Anfahrkupplung 6 während der Beschleunigung des Fahrzeugs 1 in der Anfahrkupplung 6 umgesetzt wird und zur Fahrzeugbeschleunigung nicht nutzbar ist. Die Fläche "a" hingegen verkörpert die sogenannte Blindleistung, die in der Abbremsphase des Fahrzeugs 1 vom Motor 3 in das Gesamtsystem Fahrzeug 1 eingebracht wird. Diese Leistung fällt vollständig in der wenigstens einen Anfahrkupplung 6 an und ist nicht für das Fahrzeug nutzbar. Erfindungsgemäß wird nun beim Abbremsen des Fahrzeugs durch Umgehung der wenigstens einen Anfahrkupplung 6 dieser Blindleistungsanteil "a" verringert, im günstigsten Fall ist diese Anteil gemäß Figur 5, rechte Darstellung, gleich Null.

Das erfindungsgemäße Verfahren ist nicht auf die beschriebene Ausführung beschränkt, sondern kann an beliebigen Fahrzeugen eingesetzt werden um die erfindungsgemäßen Effekte zu erzielen.

### Bezugszeichenliste

- 1: Fahrzeug
- 2: Rahmen
- 3: Antriebsmotor
- 4: Energieübertragungsmittel
- 5: Getriebe
- 6: Anfahrkupplung
- 7: Abtriebswelle
- 8: Zwischengetriebe
- 9: Zwischenwelle
- 10: Abtriebsglieder
- 11: Differentialgetriebe
- 12: Verteilgetriebe
- 13: Verteilgetriebe
- 14: Vorderachse
- 15: Hinterachse
- 16: Laufräder
- 17: Radbremse
- 18: Hydromotor
- 19: Radmotor
- 20: Signalübertragungssystem
- 21: Bremsenmanagement-Controller
- 22: Fahrerstand
- 23: Fahrer
- 24: Lenkrad
- 25: Bremspedal
- 26: Fahrhebel
- 27: Wendegetriebe
- 28: Zwischenwelle
- 29: Stirnrad
- 30: Stirnrad
- 31: Stirnrad
- 32: Stirnrad
- 33: Zwischenrad
- 34: Getriebe
- 35-38: Leitungssystem
- 39: Bedientaster
- 40: Fahrgeschwindigkeitssensor
- 41: Schallwellen
- 42: Radgeschwindigkeitssensor
- 43: Leitungssystem
- 44: Leitungssystem
- 45: Signalübertragungssystem
- 46: Signalübertragungssystem
- 47: Koppelfahrzeug
- 48: Fahrwerkachse
- 49: Fahrtrichtungssensor
- 50: Radwinkelsensor
- 51: Signalübertragungssystem
- 52: Signalübertragungssystem
- 53: Fahrzeugbremssystem
- 54: Bremsenmanagementsystem
- 55: Bremsventil
- 56: Leitungssystem
- 57: Bremszylinder
- 58: Kennlinie
- 59: Signalübertragungssystem
- 60: Fahrzeugmanagementsystem

- A1..n: Ausgangssignale
- E1..8: Eingangssignale
- FR: Fahrtrichtung
- a: Blindleistungsanteil
- b: Teilenergiemenge
- c: Teilenergiemenge

## Patentansprüche

1. Verfahren zur Steuerung eines Fahrzeugs, wobei dem Fahrzeug zumindest ein Antriebsmotor zugeordnet ist, der mit zumindest einem die Bewegung des Fahrzeugs beeinflussenden Getriebe in Wirkverbindung steht, welches über wenigstens eine Anfahrkupplung verfügt und wobei sich das Fahrzeug mittels Laufrädern und/oder alternativen Fahrsystemen auf dem Boden abstützt und zumindest einem Teil der Laufräder und/oder alternativen Fahrsysteme mit dem Fahrzeugbremssystem in Wirkverbindung stehende Bremsen zugeordnet sind,
**dadurch gekennzeichnet,**
**dass** die Drehzahl- und/oder Drehrichtungsänderung des zumindest einen Getriebes (5) unter zumindest teilweiser Umgehung der wenigstens einen Anfahrkupplung (6) des zumindest einen Getriebes (5) von dem Fahrzeugbremssystem (53) unterstützt wird.

2. Verfahren zur Steuerung eines Fahrzeugs nach Anspruch 1,
**dadurch gekennzeichnet,**
**dass** jedem Laufrad (16) oder jeder Achse (14, 15) des Fahrzeugs (1, 47) eine Radbremse (17, 18, 19) zugeordnet ist.

3. Verfahren zur Steuerung eines Fahrzeugs nach einem oder mehreren der vorhergehenden Ansprüche,
**dadurch gekennzeichnet,**
**dass** das Fahrzeug (1, 47) von einem selbstfahrenden Zugfahrzeug (1) und zumindest einem weitern an das Zugfahrzeug (1) adaptierten Koppelfahrzeug (47) gebildet wird und einem oder mehreren Laufrädern (16) oder Achsen (14, 15) des Zugfahrzeugs (1) und des wenigstens einen Koppelfahrzeugs (47) Radbremsen (17, 18, 19) zugeordnet sind.

4. Verfahren zur Steuerung eines Fahrzeugs nach einem oder mehreren der vorhergehenden Ansprüche,
**dadurch gekennzeichnet,**
**dass** das Fahrzeugbremssystem (53) von einem Fahrzeugbremsenmanagementsystem (54) gebildet wird.

5. Verfahren zur Steuerung eines Fahrzeugs nach Anspruch 4,
**dadurch gekennzeichnet,**
**dass** das Fahrzeugbremsenmanagementsystem (54) Elemente (24-26, 39, 40, 42, 49, 50) zur Generierung von einem oder mehreren Eingangssignalen (E1-E8) umfasst, die einem Bremsenmanagement-Controller (21) zugeführt werden und wobei der Bremsenmanagement-Controller (21) ein oder mehrere Ausgangssignale (A1-An) generiert, die zumindest auf die Laufräder (16) und/oder die Achsen (14, 15) und/oder das wenigstens eine über eine Anfahrkupplung (6) verfügende Getriebe (5) des Fahrzeugs (1) einwirken.

6. Verfahren zur Steuerung eines Fahrzeugs nach Anspruch 6,
**dadurch gekennzeichnet,**
**dass** die Eingangssignale (E1-E8) fahrzeuggeneriert und/oder fahrergeneriert sind.

7. Verfahren zur Steuerung eines Fahrzeugs nach Anspruch 6,
**dadurch gekennzeichnet,**
**dass** die fahrergenerierten Eingangssignale (E1-E4) ein oder mehrere der Signale "Bremsen" (E1), "Lenkeinschlag" (E2), "Fahrtrichtung" (E3) und/oder "Bremsen über Antriebsstrang" (E4) sind.

8. Verfahren zur Steuerung eines Fahrzeugs nach Anspruch 6,
**dadurch gekennzeichnet,**
**dass** die fahrzeuggenerierten Eingangssignale (E5-E8) ein oder mehrere der Signale, "Geschwindigkeit über Grund" (E5), "Radgeschwindigkeit" (E6), "Fahrtrichtung" (E7) und/oder "Radstellung" (E8) sind.

9. Verfahren zur Steuerung eines Fahrzeugs nach einem oder mehreren der vorhergehenden Ansprüche,
**dadurch gekennzeichnet,**
**dass** die Ausgangssignale (A1-An) des Bremsenmanagement-Controllers (21) Bremssignale (A1-A3) zur Ansteuerung des Fahrzeugbremssystems (53) und des wenigstens einen eine Anfahrkupplung (6) aufnehmenden Getriebes (5) des Fahrzeugs (1, 47) und/oder Ausgangssignale (A4) zur Beeinflussung eines Fahrzeugmanagementsystem (60) sind.

10. Verfahren zur Steuerung eines Fahrzeugs nach Anspruch 9,
**dadurch gekennzeichnet,**
**dass** die Ausgangssignale (A4) für ein Fahrzeugmanagementsystem (60) "Geschwindigkeitsänderung" sowie "errechnete Energie des Fahrzeugs" sein können.

11. Verfahren zur Steuerung eines Fahrzeugs nach einem oder mehreren der vorhergehenden Ansprüche,
**dadurch gekennzeichnet,**
**dass** der Fahrer (23) den Bremsvorgang des Fahrzeugs (1) auslösen kann, ohne unmittelbar ein Element des Fahrzeugbremssystems (53) zu bedienen.

12. Vorrichtung zur Durchführung des Verfahrens nach Anspruch 1,
**dadurch gekennzeichnet,**
**dass** das Fahrzeug (1, 47) ein Off-Highway Fahrzeug, insbesondere ein landoder forstwirtschaftliches Fahrzeug ist, dem zumindest ein eine Anfahrkupplung (6) aufnehmendes hydromechanisch leistungsverzweigtes Getriebe (5, 34) zugeordnet ist und zumindest die Anfahrkupplung (6) mittels Signalübertragungssystem (45) von wenigstens einem Bremsenmanagement-Controller (21) angesteuert werden kann, der über wenigstens ein weiteres Signalübertragungssystem (20) zugleich auf das Fahrzeugbremssystem (53) einwirkt.

13. Vorrichtung nach Anspruch 11,
**dadurch gekennzeichnet,**
**dass** der Bremsenmanagement-Controller (21) über eine oder mehrere weitere Signalübertragungssysteme (35-38, 43, 44, 51, 52) mit einem oder mehreren Eingangssignale (E1-E8) generierenden Elementen (24-26, 39, 40, 42, 49, 50) in Wirkverbindung stehen.

14. Vorrichtung nach Anspruch 12,
**dadurch gekennzeichnet,**
**dass** die Eingangssignale (E1-E8) generierenden Elemente ein oder mehrere an sich bekannte Elemente wie Lenkrad (24), Bremspedal (25), Fahrhebel (26), Bedientaster (39), Fahrgeschwindigkeitssensoren (49), Radgeschwindigkeitssensoren (42), Fahrtrichtungssensoren (49) und Radwinkelsensoren (50) sind.

15. Verfahren zur Steuerung eines Fahrzeugs nach einem oder mehreren der vorhergehenden Ansprüche,
**dadurch gekennzeichnet,**
**dass** das oder die Laufräder (16) von alternativen Fahrsystemen wie an sich bekannten Raupenfahrwerken gebildet werden können.
